# EUROPEAN PATENT APPLICATION

(11) **EP 4 694 182 A1**
(43) Date of publication of application: **11.02.2026**
(21) Application number: 24803029.8
(22) Date of filing: 08.05.2024
(51) Int. Cl.: H04Q 11/00

(54) **BURST CLOCK DATA RECOVERY (BCDR) CHIP WORKING PARAMETER CONFIGURATION METHOD AND DEVICE**

(30) Priority: 08.05.2023 CN 202310512085
(71) Applicant: ZTE CORPORATION, Shenzhen, Guangdong 518057 (CN)
(72) Inventor: HUANG, Xingang, Shenzhen, Guangdong 518057 (CN); YANG, Bo, Shenzhen, Guangdong 518057 (CN); MA, Zhuang, Shenzhen, Guangdong 518057 (CN)
(74) Representative: Deambrogi, Edgardo
(86) International application number: PCT/CN2024/091781
(87) International publication number: WO 2024/230749

(57) **Abstract**

Embodiments of the present disclosure provide a burst clock data recovery (BCDR) chip working parameter configuration method and device. The method comprises: a BCDR chip performs working parameter training according to a burst signal of a passive optical network ONU to obtain working parameters of the ONC; and the BCDR chip associates first identity information of the ONU from an optical line terminal (OLT) with the working parameters to establish a correspondence between the first identity information and the working parameters, so as to perform working parameter configuration on the BCDR chip according to the correspondence.

## Description

### Cross-Reference to Related Application

The present disclosure is based on and claims priority to Chinese patent application CN202310512085.0 filed on May 8, 2023 and entitled "Burst Clock Data Recovery (BCDR) Chip Working Parameter Configuration Method and Device", the disclosure of which is incorporated herein by reference in its entirety.

### Technical Field

Embodiments of the present disclosure relate to the field of communications, and in particular, to a method and device for configuring an operation parameter of a Burst Clock Data Recovery (BCDR) chip.

### Background

An Optical Line Terminal (OLT) in a Passive Optical Network (PON) system needs to quickly receive burst packets from an Optical Network Unit (ONU). The OLT reception requires support for burst clock recovery functionality. Additionally, the signal power, device bandwidth, and transmission distance of upstream burst packets of respective ONUs are different. To improve reception sensitivity, 50G-PON introduces an equalization technology to compensate for signal imbalance, and the OLT reception needs to support burst equalization. Burst clock recovery and burst equalization may be implemented using either an analog Clock Recovery Circuit (CDR) solution or a Digital Signal Processor (DSP) solution, with the functionality housed in a dedicated Burst Clock Data Recovery (BCDR) chip. To reduce the time for burst clock recovery and burst equalization, the industry has proposed pre-configuring an operation parameter in the BCDR chip, configuring the operation parameter corresponding to the ONU in advance before the ONU burst packet arrives. The operation parameter of the BCDR chip corresponding to the ONU needs to be acquired through training, but there is no available solution for how to acquire, store, and use the operation parameter.

### Summary

Embodiments of the present disclosure provide a method and device for configuring an operation parameter of a Burst Clock Data Recovery (BCDR) chip.

According to an embodiment of the present disclosure, provided is a method for configuring an operation parameter of a BCDR chip, including: performing, by the BCDR chip, operation parameter training according to a burst signal of an Optical Network Unit (ONU) in a passive optical network to acquire an operation parameter corresponding to the ONU; and associating, by the BCDR chip, first identity information of the ONU from an Optical Line Terminal (OLT) with the operation parameter, and establishing, by the BCDR chip, a correspondence between the first identity information and the operation parameter, so as to perform operation parameter configuration for the BCDR chip according to the correspondence.

According to another embodiment of the present disclosure, provided is a method for configuring an operation parameter of a BCDR chip, including: sending, by an Optical Line Terminal (OLT), a first message instruction to the BCDR chip, so as to enable the BCDR chip to receive a burst signal of an Optical Network Unit (ONU) according to the first message instruction to acquire an operation parameter corresponding to the ONU; and sending, by the OLT, first identity information of the ONU to the BCDR chip, so as to enable the BCDR chip to establish a correspondence between the first identity information and the operation parameter, and further perform operation parameter configuration for the BCDR chip according to the correspondence.

According to another embodiment of the present disclosure, provided is a device for configuring an operation parameter of a BCDR chip, which is located in the BCDR chip. The device includes: a training module, configured to perform operation parameter training according to a burst signal of an Optical Network Unit (ONU) in a passive optical network to acquire an operation parameter corresponding to the ONU; and an association module, configured to associate first identity information of the ONU from an Optical Line Terminal (OLT) with the operation parameter, and establish a correspondence between the first identity information and the operation parameter, so as to perform operation parameter configuration for the BCDR chip according to the correspondence.

According to another embodiment of the present disclosure, provided is a device for configuring an operation parameter of a BCDR chip, which is located in an OLT. The device includes: a first sending module, configured to send a first message instruction to the BCDR chip, so as to enable the BCDR chip to receive a burst signal of an Optical Network Unit (ONU) according to the first message instruction to acquire an operation parameter corresponding to the ONU; and a second sending module, configured to send first identity information of the ONU to the BCDR chip, so as to enable the BCDR chip to establish a correspondence between the first identity information and the operation parameter, and further perform operation parameter configuration for the BCDR chip according to the correspondence.

According to another embodiment of the present disclosure, provided is a computer readable storage medium. The computer readable storage medium stores a computer program, and the computer program, when being executed by a processor, causes the processor to implement operations in any one of the method embodiments.

According to another embodiment of the present disclosure, provided is an electronic device, including a memory, a processor, and a computer program stored in the memory and executable on the processor, wherein the processor, when executing the computer program, implement operations in any one of the method embodiments.

### Brief Description of the Drawings

Fig. 1 is an operation network architecture diagram of a method for configuring an operation parameter of a BCDR chip according to some embodiments of the present disclosure;
Fig. 2 is a flowchart of a method for configuring an operation parameter of a BCDR chip according to some embodiments of the present disclosure;
Fig. 3 is a flowchart of a method for configuring an operation parameter of a BCDR chip according to some embodiments of the present disclosure;
Fig. 4 is a structural block diagram of a device for configuring an operation parameter of a BCDR chip according to some embodiments of the present disclosure;
Fig. 5 is a structural block diagram of a device for configuring an operation parameter of a BCDR chip according to some embodiments of the present disclosure;
Fig. 6 is a structural block diagram of a device for configuring an operation parameter of a BCDR chip according to some embodiments of the present disclosure;
Fig. 7 is a structural block diagram of a device for configuring an operation parameter of a BCDR chip according to some embodiments of the present disclosure;
Fig. 8 is a structural block diagram of a device for configuring an operation parameter of a BCDR chip according to some embodiments of the present disclosure;
Fig. 9 is a structural block diagram of a device for configuring an operation parameter of a BCDR chip according to some embodiments of the present disclosure;
Fig. 10 is a schematic diagram illustrating a communication principle between an OLT and a BCDR chip according to some embodiments of the present disclosure;
Fig. 11 is a schematic diagram illustrating a communication principle between an OLT and a BCDR chip according to some embodiments of the present disclosure; and
Fig. 12 is a flowchart of a method for configuring an operation parameter of a BCDR chip according to some embodiments of the present disclosure.

### Detailed Description of the Embodiments

Hereinafter, the embodiments of the present disclosure will be described in detail with reference to the accompanying drawings and embodiments.

It should be noted that terms such as "first" and "second" in the description and claims of the embodiments of the present disclosure and the drawings are used to distinguish similar objects, and are not necessarily used to describe a specific sequence or order.

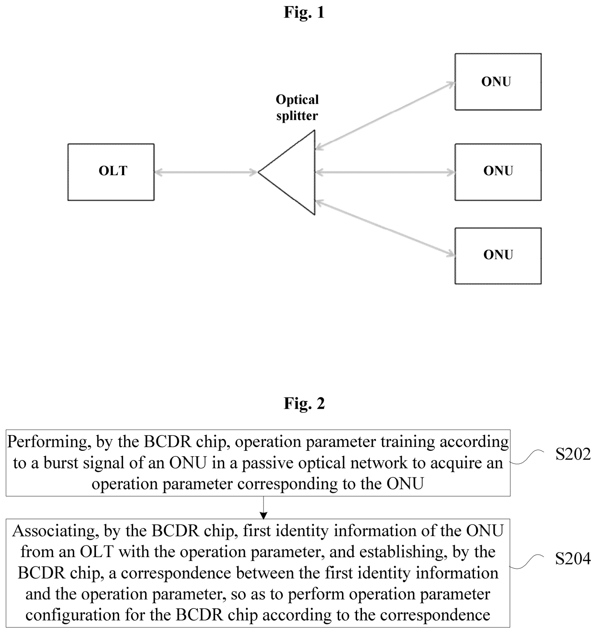

Fig. 1 is an operation network architecture diagram of a method for configuring an operation parameter of a BCDR chip according to some embodiments of the present disclosure. The embodiments of the present disclosure may operate on the network architecture shown in Fig. 1. As shown in Fig. 1, the network architecture includes: an OLT, an optical splitter, and a plurality of ONUs, where the OLT and the plurality of ONUs exchange information through the optical splitter.

The present embodiment provides a method for configuring an operation parameter of a BCDR chip running on the above computer terminal or network architecture. Fig. 2 is a flowchart of a method for configuring an operation parameter of a BCDR chip according to some embodiments of the present disclosure. As shown in Fig. 2, the flow includes the following operations S202 and S204.

In operation S202, the BCDR chip performs operation parameter training according to a burst signal of an Optical Network Unit (ONU) in a passive optical network to acquire an operation parameter corresponding to the ONU.

In an exemplary embodiment, before operation S202, the method may further include an operation that the BCDR chip receives a first message instruction from the OLT, so as to receive the burst signal of the ONU according to the first message instruction.

In one exemplary embodiment, the operation parameters include at least one of: burst clock recovery; burst equalization; equalizer parameters.

In an exemplary embodiment, after operation S202, the method may further include an operation that the BCDR chip deletes the operation parameter in a case where the first identity information is not received within a preset time interval after the operation parameter is acquired.

In operation S204, the BCDR chip associates first identity information of the ONU from an Optical Line Terminal (OLT) with the operation parameter, and establishes a correspondence between the first identity information and the operation parameter, so as to perform operation parameter configuration for the BCDR chip according to the correspondence.

In an exemplary embodiment, the operation that the BCDR chip establishes the correspondence between the first identity information and the operation parameter includes: the BCDR chip deletes the operation parameter in a case where a quantity of the first identity information is not equal to a quantity of the operation parameter.

In an exemplary embodiment, the operation of performing the operation parameter configuration for the BCDR chip according to the correspondence includes an operation that the BCDR chip receives second identity information of an ONU burst packet, and acquires the operation parameter corresponding to the second identity information according to the correspondence, so as to perform the operation parameter configuration for the BCDR chip.

In an exemplary embodiment, before performing the operation parameter configuration for the BCDR chip according to the correspondence, the method may further include an operation that the BCDR chip receives a second message instruction from the OLT, so as to receive the second identity information of the ONU burst packet according to the second message instruction.

In an exemplary embodiment, the method may further include an operation that the BCDR chip receives a third message instruction from the OLT in a case where a specific ONU goes offline, and deletes, according to the third message instruction, the operation parameter corresponding to the specific ONU from the correspondence.

By means of the described operations, the BCDR chip performs operation parameter training according to the burst signal of the ONU, so as to acquire the operation parameter corresponding to the ONU; the BCDR chip associates the first identity information of the ONU from the OLT with the operation parameter, establishes the correspondence between the first identity information and the operation parameter, and configures the operation parameter of the BCDR chip according to the correspondence (i.e., performs operation parameter configuration for the BCDR chip according to the correspondence). The solution solves the problem in the related art that an operation parameter of a BCDR chip corresponding to an ONU cannot be effectively acquired, and achieves the effect of efficiently acquiring, storing and using an operation parameter of a BCDR chip corresponding to an ONU.

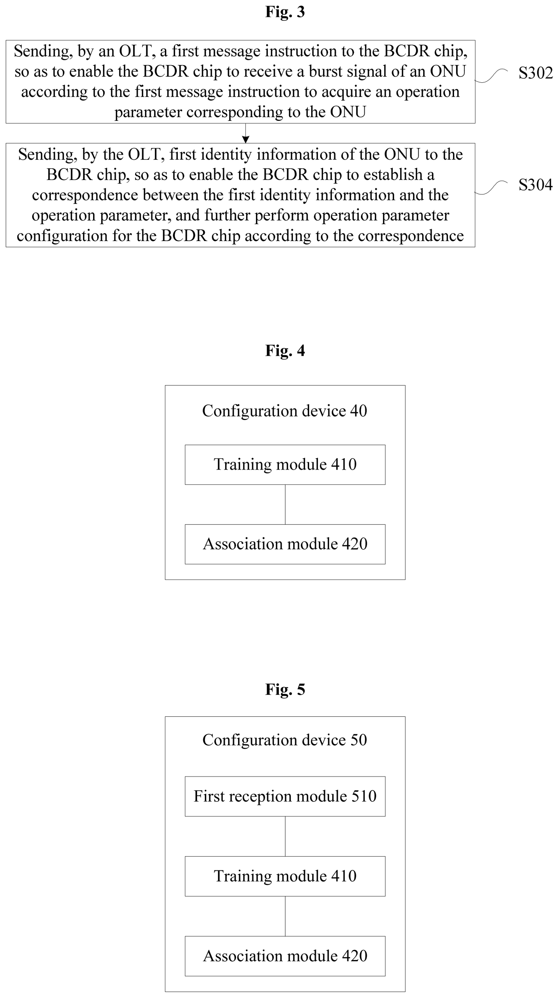

The embodiments of the present disclosure also provide a method for configuring an operation parameter of a BCDR chip. Fig. 3 is a flowchart of a method for configuring an operation parameter of a BCDR chip according to some embodiments of the present disclosure. As shown in Fig. 3, the flow includes the following operations S302 and S304.

In operation S302, an OLT sends a first message instruction to the BCDR chip, so as to enable the BCDR chip to receive a burst signal of an ONU according to the first message instruction to acquire an operation parameter corresponding to the ONU.

In operation S304, the OLT sends first identity information of the ONU to the BCDR chip, so as to enable the BCDR chip to establish a correspondence between the first identity information and the operation parameter, and further perform operation parameter configuration for the BCDR chip according to the correspondence.

In an exemplary embodiment, the operation of performing the operation parameter configuration for the BCDR chip according to the correspondence includes: the OLT sends a second message instruction to the BCDR chip, so as to enable the BCDR chip to receive second identity information of an ONU burst packet according to the second message instruction, and further perform the operation parameter configuration.

In an exemplary embodiment, the method may further include an operation that the OLT sends a third message instruction to the BCDR chip in a case where a specific ONU goes offline, so as to enable the BCDR chip to delete, according to the third message instruction, the operation parameter corresponding to the specific ONU from the correspondence.

Through the description of the foregoing embodiments, those skilled in the art may clearly understand that the method according to the foregoing embodiments may be implemented by software in addition to a necessary universal hardware platform, and definitely may also be implemented by hardware. However, in many cases, the former is a preferred implementation. Based on such understanding, the essence of the technical solutions of the embodiments of the present disclosure or the part contributing to the related art may be embodied in the form of a computer software product. The computer software product may be stored in a storage medium (such as a Read-Only Memory (ROM)/Random Access Memory (RAM), a magnetic disk, and an optical disk), and includes several instructions for instructing a terminal apparatus (which may be a mobile phone, a computer, a server, a network apparatus, or the like).

The embodiments of the present disclosure also provide a device for configuring an operation parameter of a BCDR chip. The device is used for implementing the described embodiments and exemplary implementations, and what has been described will not be elaborated. The term "module", as used hereinafter, is a combination of software and/or hardware capable of realizing a predetermined function. Although the device described in the following embodiment is preferably implemented by software, implementation of hardware or a combination of software and hardware is also possible and conceivable.

Fig. 4 is a structural block diagram of a device for configuring an operation parameter of a BCDR chip according to some embodiments of the present disclosure. The device for configuring the operation parameter of the BCDR chip is located in the BCDR chip. As shown in Fig. 4, the device 40 for configuring the operation parameter of the BCDR chip includes: a training module 410, configured to perform operation parameter training according to a burst signal of an Optical Network Unit (ONU) in a passive optical network to acquire an operation parameter corresponding to the ONU; and an association module 420, configured to associate first identity information of the ONU from an Optical Line Terminal (OLT) with the operation parameter, and establish a correspondence between the first identity information and the operation parameter, so as to perform operation parameter configuration for the BCDR chip according to the correspondence.

In an exemplary embodiment, the association module 420 is configured to perform the operation parameter training according to the burst signal of the ONU in the passive optical network by execution of the following operations: receiving second identity information of an ONU burst packet, and acquiring the operation parameter corresponding to the second identity information according to the correspondence, so as to perform the operation parameter configuration for the BCDR chip.

Fig. 5 is a structural block diagram of a device for configuring an operation parameter of a BCDR chip according to some embodiments of the present disclosure. As shown in Fig. 5, in addition to the modules in Fig. 4, the device 50 for configuring the operation parameter of the BCDR chip may further include: a first reception module 510, configured to receive a first message instruction from the OLT, and receive the burst signal of the ONU according to the first message instruction.

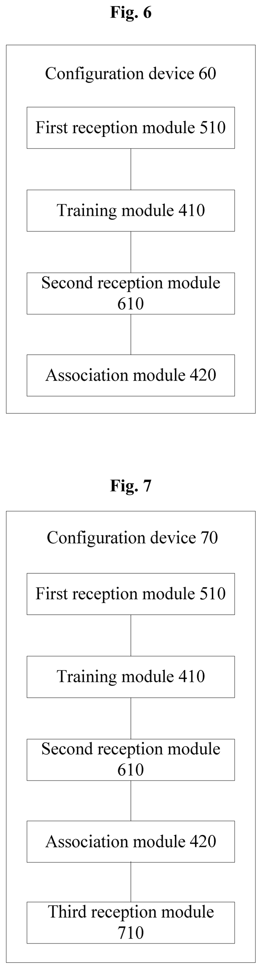

Fig. 6 is a structural block diagram of a device for configuring an operation parameter of a BCDR chip according to some embodiments of the present disclosure. As shown in Fig. 6, in addition to the modules in Fig. 5, the device 60 for configuring the operation parameter of the BCDR chip may further include: a second reception module 610, configured to receive a second message instruction from the OLT, and receive the second identity information of the ONU burst packet according to the second message instruction.

Fig. 7 is a structural block diagram of a device for configuring an operation parameter of a BCDR chip according to some embodiments of the present disclosure. As shown in Fig. 7, in addition to the modules in Fig. 6, the device 70 for configuring the operation parameter of the BCDR chip may further include: a third reception module 710, configured to receive a third message instruction from the OLT in a case where a specific ONU goes offline, and delete, according to the third message instruction, the operation parameter corresponding to the specific ONU from the correspondence.

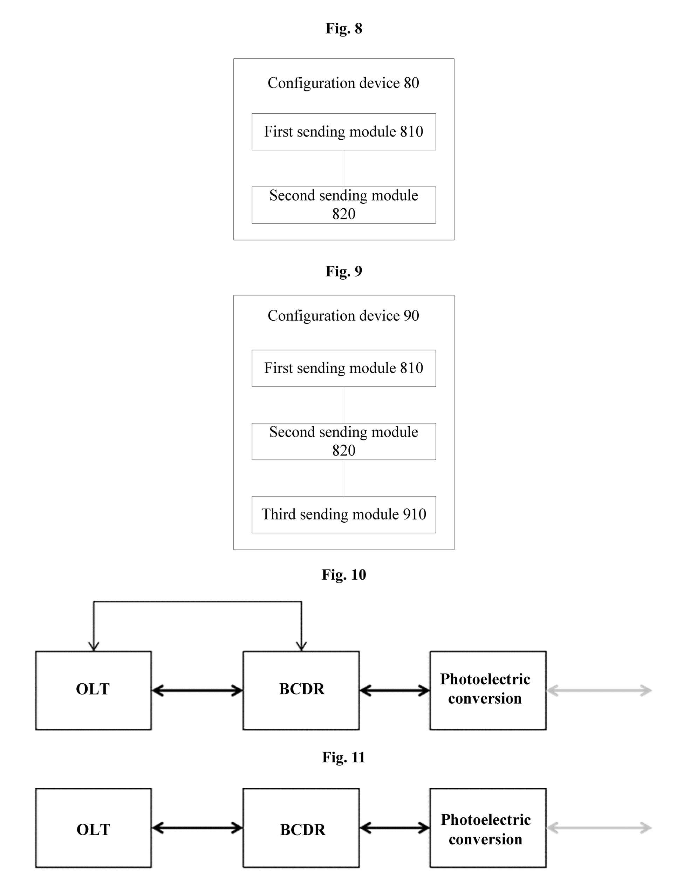

In the embodiments of the present disclosure, a device for configuring an operation parameter of a BCDR chip is further provided, which is located in an OLT. Fig. 8 is a structural block diagram of a device for configuring an operation parameter of a BCDR chip according to some embodiments of the present disclosure, the device 80 for configuring the operation parameter of the BCDR chip includes: a first sending module 810, configured to send a first message instruction to the BCDR chip, so as to enable the BCDR chip to receive a burst signal of an Optical Network Unit (ONU) according to the first message instruction to acquire an operation parameter corresponding to the ONU; and a second sending module 820, configured to send first identity information of the ONU to the BCDR chip, so as to enable the BCDR chip to establish a correspondence between the first identity information and the operation parameter, and further perform operation parameter configuration for the BCDR chip according to the correspondence.

In an exemplary embodiment, the second sending module 820 is configured to perform the operation parameter configuration according to the correspondence by execution of the following operations: sending a second message instruction to the BCDR chip, so as to enable the BCDR chip to receive second identity information of an ONU burst packet according to the second message instruction, and further perform the operation parameter configuration.

In an exemplary embodiment, Fig. 9 is a structural block diagram of a device for configuring an operation parameter of a BCDR chip according to some embodiments of the present disclosure. As shown in Fig. 9, in addition to the modules shown in Fig. 8, the device 90 for configuring the operation parameter of the BCDR chip may further include: a third sending module 910, configured to send a third message instruction to the BCDR chip in a case where a specific ONU goes offline, so as to enable the BCDR chip to delete, according to the third message instruction, the operation parameter corresponding to the specific ONU from the correspondence.

In the foregoing implementation process, the first message instruction and the second message instruction are used to notify (or trigger) the BCDR chip to enter a specific operation phase or operation state, and a form and content of the first message instruction and the second message instruction may be set according to an actual situation, which is not limited herein.

In the foregoing embodiment, the first identity information and the second identity information are used to indicate identity information of an ONU or an ONU burst packet, and a specific form and content of the first identity information and the second identity information may be set according to an actual situation, which is not limited herein.

It should be noted that each module may be implemented by software or hardware. The implementation based on hardware may be embodied in, but is not limited to, the following manner: all the modules are located in a same processor; alternatively, the modules are located in different processors in an arbitrary combination.

The embodiments of the present disclosure further provide a computer readable storage medium. The computer readable storage medium stores a computer program, and the computer program, when being executed by a processor, causes the processor to implement the operations in any one of the described method embodiments.

In an exemplary embodiment, the computer readable storage medium may include, but is not limited to, any medium that can store a computer program, such as a Universal Serial Bus (USB) flash drive, a Read-Only Memory (ROM), a Random Access Memory (RAM), a mobile hard disk, a magnetic disk, or an optical disc.

The embodiments of the present disclosure further provide an electronic device, including a memory and a processor. The memory stores a computer program. The processor is configured to run the computer program to execute the operations in any one of the method embodiments.

In an exemplary embodiment, the electronic device may further include a transmission device and an input/output device, wherein the transmission device is connected to the processor, and the input/output device is connected to the processor.

For examples in this embodiment, reference may be made to the examples described in the foregoing embodiments and exemplary embodiments, and details are not repeatedly described in this embodiment.

Obviously, those skilled in the art should understand that each module or each operation of the above embodiments of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. As such, the embodiments of the present disclosure are not limited to any particular hardware and software combination.

In order to enable those skilled in the art to better understand the technical solutions of the embodiments of the present disclosure, descriptions will be given below with reference to a scenario-based embodiment.

### Scenario-based Embodiment 1

A BCDR chip requires pre-configuration of an operation parameter, which necessitates initial training to acquire the operation parameter corresponding to each ONU, and then reading and configuring the operation parameter into effect during operation. However, the BCDR chip is not aware of which ONU the currently trained and acquired operation parameter belongs to, nor does it know which ONU is currently operating, and this requires the cooperation from an OLT.

In actual implementation, during the operation parameter training phase, the OLT may choose to notify, at an ONU registration phase, the BCDR chip to conduct training and acquire the operation parameter corresponding to the ONU during this training phase, and the OLT may send identity information of the ONU to the BCDR chip. The BCDR chip completes the acquisition and storage of the operation parameter corresponding to the ONU. In the operation phase, the OLT sends a message to notify the BCDR chip of the impending arrival of an ONU burst packet. The BCDR chip then configures the operation parameter corresponding to that ONU into effect. In this disclosed embodiment, the operation parameter includes, but is not limited to, equalizer parameters such as tap coefficients, Clock Data Recovery (CDR) phase, and/or Variable Gain Amplifier (VGA) gain.

The OLT performs the Medium Access Control (MAC) function of the PON system, typically implemented by an Application Specific Integrated Circuit (ASIC) chip. The BCDR chip completes pre-equalization of the transmit end in the downstream direction and performs burst clock recovery and burst equalization compensation in the upstream direction. The optoelectronic conversion devices may include lasers, detectors, laser drivers, linear or limiting amplifiers for upstream reception, Transimpedance Amplifiers (TIA). The BCDR chip may be located on an OLT line card or within an optical module. In some embodiments, the BCDR chip may be integrated with the laser driver and the linear or limiting amplifier for upstream reception. For the Bosa on Board solution, the BCDR chip, optoelectronic conversion devices, and OLT are all located on the OLT line card.

Fig. 10 is a schematic diagram illustrating a communication principle between an OLT and a BCDR chip according to some embodiments of the present disclosure. As shown in Fig. 10, the OLT communicates with the BCDR chip via an independent data channel, so as to notify the BCDR chip whether it is currently in a training phase or an operating phase, and send identity information of the ONU to the BCDR chip.

Fig. 11 is a schematic diagram illustrating a communication principle between an OLT and a BCDR chip according to some embodiments of the present disclosure. As shown inFig. 11, the OLT does not have an independent data channel, but uses upstream and downstream service data channels to communicate with the BCDR chip, so as to notify the BCDR chip whether it is currently in a training phase or an operating phase, and send identity information of the ONU to the BCDR chip.

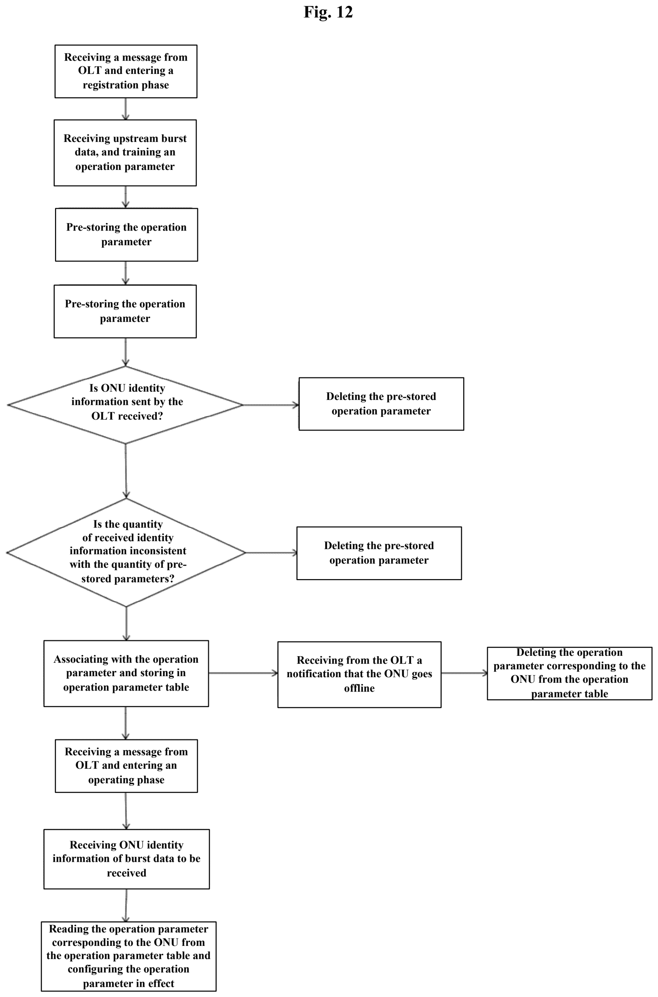

Fig. 12 is a flowchart of a method for configuring an operation parameter of a BCDR chip according to some embodiments of the present disclosure. As shown in Fig. 12, in an embodiment of this scenario, the flow is executed by a BCDR chip, and the flow includes the following parts:

### Operation parameter acquisition:

The OLT sends a message to notify the BCDR chip to enter a registration phase, and in this phase, the BCDR chip performs operation parameter training on the received ONU burst signal, so as to acquire an operation parameter corresponding to the ONU, determines an operation parameter such as burst clock recovery and burst balancing, and pre-stores the operation parameter. During the registration phase, the ONU may send a long preamble, so that the BCDR chip has sufficient time to perform the operation parameter training. The operation parameter includes, but is not limited to, equalizer parameters, such as tap coefficients, CDR phases, VGA gains, etc.

In an actual implementation process, the OLT sends a message and notifies the BCDR chip to enter a registration phase, that is, the OLT sends a first message instruction to the BCDR chip, so as to notify the BCDR chip to enter the registration phase, and receive a burst signal of the ONU according to the first message instruction.

### Operation parameter storage:

The OLT acquires the ONU identity information (i.e. the first identity information), such as an ONU Serial Number (ONU SN), from an ONU registration message, assigns an ONU ID to the ONU, and sends the ONU identity information, such as the ONU SN or the ONU ID, to the BCDR chip. The BCDR chip stores the ONU identity information, associates the ONU identity information with the pre-stored operation parameter of the BCDR chip, and obtains an operation parameter table recording a correspondence between the ONU identity information and the ONU BCDR operation parameter.

### Operation parameter utilization:

In an operating phase, the OLT notifies the BCDR chip to enter an operating state. In this phase, the OLT sends ONU identity information (i.e. the second identity information) of an ONU burst packet to be received to the BCDR chip. The BCDR chip reads the BCDR operation parameter corresponding to the ONU from the operation parameter table according to the received ONU identity information, and configures the operation parameter into effect. When the ONU burst packet reaches the BCDR chip, the operation parameter of the BCDR chip has been configured to correspond to the operation parameter required by the ONU, so that the time for establishing the operation parameter of a BCDR chip upon burst reception can be shortened, thereby achieving the effects of reducing the length of a preamble, reducing overhead, and improving bandwidth efficiency.

In a practical implementation process, in the operating phase, the OLT notifies the BCDR chip to enter the operating state, that is, the OLT sends the second message instruction to the BCDR chip, and the BCDR chip receives the second identity information of the ONU burst packet according to the second message instruction.

### Operation parameter deletion:

After a certain period of time (i.e. the preset time interval in the foregoing embodiment) from the pre-storage of the operation parameter acquired in the training phase, in a case where the BCDR chip still does not receive any ONU identity information sent by the OLT, the pre-stored operation parameter is discarded. The length of this period of time may be configured.

When an ONU goes offline, the OLT sends a message (i.e. a third message instruction) to notify to delete the item corresponding to the ONU stored in the operation parameter table.

In a case where multiple ONUs are registered in a registration window, respective operation parameters of the BCDR chip corresponding to the multiple ONUs are pre-stored in sequence, and according to the ONU identity information sent by the OLT, the respective pre-stored operation parameters are sequentially associated with the ONU identity information of the multiple ONUs and the correspondences are stored in an operation parameter table. In a case where the number of the pre-stored operation parameters in one registration window is different from the number of the received pieces of ONU identity information sent by the OLT, all the operation parameters acquired within the registration window are discarded.

In the foregoing implementation process, the first message instruction, the second message instruction, and the third message instruction are used to notify (or trigger) the BCDR chip to enter a specific operating phase or operating state. The form and content of the first message instruction, the second message instruction, and the third message instruction may be set according to an actual situation, which is not limited herein.

In conclusion, the embodiments of the present disclosure provide a method and device for configuring an operation parameter of a BCDR chip, which solve the problem that a trained operation parameter cannot correspond to an ONU identity in a scheme for pre-configuring an operation parameter of a BCDR chip. The method may be applied to a point-to-multipoint communication system that needs a DSP to perform burst receiving (mainly a PON system).

The above are only exemplary embodiments of the embodiments of the present disclosure, and are not intended to limit the embodiments of the present disclosure. For those skilled in the art, the embodiments of the present disclosure may have various modifications and variations. Any modifications, equivalent replacements, improvements and the like made within the principle of the embodiments of the present disclosure shall fall within the scope of protection of the embodiments of the present disclosure.

## Claims

1. A method for configuring an operation parameter of a Burst Clock Data Recovery, BCDR, chip, wherein the method comprises:
performing, by the BCDR chip, operation parameter training according to a burst signal of an Optical Network Unit, ONU, in a passive optical network to acquire an operation parameter corresponding to the ONU; and
associating, by the BCDR chip, first identity information of the ONU from an Optical Line Terminal, OLT, with the operation parameter, and establishing, by the BCDR chip, a correspondence between the first identity information and the operation parameter, so as to perform operation parameter configuration for the BCDR chip according to the correspondence.

2. The method according to claim 1, wherein before performing, by the BCDR chip, the operation parameter training according to the burst signal of the ONU in the passive optical network, the method further comprises:
receiving, by the BCDR chip, a first message instruction from the OLT, so as to receive the burst signal of the ONU according to the first message instruction.

3. The method according to claim 1, wherein the operation parameter comprises at least one of:
burst clock recovery;
burst equalization;
equalizer parameters.

4. The method according to claim 1, wherein after performing, by the BCDR chip, the operation parameter training according to the burst signal of the ONU in the passive optical network to acquire the operation parameter corresponding to the ONU, the method further comprises:
deleting, by the BCDR chip, the operation parameter in a case where the first identity information is not received within a preset time interval after the operation parameter is acquired.

5. The method according to claim 1, wherein establishing, by the BCDR chip, the correspondence between the first identity information and the operation parameter comprises:
deleting, by the BCDR chip, the operation parameter in a case where a quantity of the first identity information is not equal to a quantity of the operation parameter.

6. The method according to claim 1, wherein performing the operation parameter configuration for the BCDR chip according to the correspondence comprises:
receiving, by the BCDR chip, second identity information of an ONU burst packet, and acquiring, by the BCDR chip, the operation parameter corresponding to the second identity information according to the correspondence.

7. The method according to claim 6, wherein before performing the operation parameter configuration for the BCDR chip according to the correspondence, the method further comprises:
receiving, by the BCDR chip, a second message instruction from the OLT, so as to receive the second identity information of the ONU burst packet according to the second message instruction.

8. The method according to claim 1, further comprising:
receiving, by the BCDR chip, a third message instruction from the OLT in a case where a specific ONU goes offline, and deleting, by the BCDR chip according to the third message instruction, the operation parameter corresponding to the specific ONU from the correspondence.

9. A method for configuring an operation parameter of a Burst Clock Data Recovery, BCDR, chip, wherein the method comprises:
sending, by an Optical Line Terminal, OLT, a first message instruction to the BCDR chip, so as to enable the BCDR chip to receive a burst signal of an Optical Network Unit, ONU, according to the first message instruction to acquire an operation parameter corresponding to the ONU; and
sending, by the OLT, first identity information of the ONU to the BCDR chip, so as to enable the BCDR chip to establish a correspondence between the first identity information and the operation parameter, and further perform operation parameter configuration for the BCDR chip according to the correspondence.

10. The method according to claim 9, wherein performing the operation parameter configuration for the BCDR chip according to the correspondence comprises:
sending, by the OLT, a second message instruction to the BCDR chip, so as to enable the BCDR chip to receive second identity information of an ONU burst packet according to the second message instruction.

11. A device for configuring an operation parameter of a Burst Clock Data Recovery, BCDR, chip, located in the BCDR chip, wherein the device comprises:
a training module, configured to perform operation parameter training according to a burst signal of an Optical Network Unit, ONU, in a passive optical network to acquire an operation parameter corresponding to the ONU; and
an association module, configured to associate first identity information of the ONU from an Optical Line Terminal, OLT, with the operation parameter, and establish a correspondence between the first identity information and the operation parameter, so as to perform operation parameter configuration for the BCDR chip according to the correspondence.

12. The device according to claim 11, further comprising:
a first reception module, configured to receive a first message instruction from the OLT, and receive the burst signal of the ONU according to the first message instruction.

13. The device according to claim 11, further comprising:
a second reception module, configured to receive a second message instruction from the OLT, and receive second identity information of an ONU burst packet according to the second message instruction.

14. The device according to claim 11, further comprising:
a third reception module, configured to receive a third message instruction from the OLT in a case where a specific ONU goes offline, and delete, according to the third message instruction, the operation parameter corresponding to the specific ONU from the correspondence.

15. A device for configuring an operation parameter of a Burst Clock Data Recovery, BCDR, chip, located in an Optical Line Terminal, OLT, wherein the device comprises:
a first sending module, configured to send a first message instruction to the BCDR chip, so as to enable the BCDR chip to receive a burst signal of an Optical Network Unit, ONU, according to the first message instruction to acquire an operation parameter corresponding to the ONU; and
a second sending module, configured to send first identity information of the ONU to the BCDR chip, so as to enable the BCDR chip to establish a correspondence between the first identity information and the operation parameter, and further perform operation parameter configuration for the BCDR chip according to the correspondence.

16. A computer readable storage medium, wherein the computer readable storage medium stores a computer program, and the computer program, when being executed by a processor, causes the processor to implement the method according to any one of claims 1 to 10.

17. An electronic device, comprising a memory, a processor, and a computer program stored in the memory and executable on the processor, wherein the processor, when executing the computer program, implement the method according to any one of claims 1 to 10.
